# EUROPEAN PATENT SPECIFICATION

(11) **EP 0 428 228 B1**
(45) Date of publication and mention of the grant of the patent: **27.09.1995**
(21) Application number: 90203007.1
(22) Date of filing: 13.11.1990
(51) Int. Cl.: C08G 67/02

(54) **Preparation of polymers of carbon monoxide with unsaturated compounds**
Herstellung von Polymeren aus Kohlenmonoxid und ungesättigten Kohlenwasserstoffen
Préparation de polymères de monoxyde de carbone et de composés insaturés

(30) Priority: 15.11.1989 NL 8902821
(43) Date of publication of application: 22.05.1991
(73) Proprietor: SHELL INTERNATIONALE RESEARCH MAATSCHAPPIJ B.V., 2596 HR Den Haag (NL)
(72) Inventor: Van Broekhoven, Johannes Adrianus Maria, NL-1031 CM Amsterdam (NL); Petrus, Leonardus, NL-1031 CM Amsterdam (NL); Mastenbroek, Barend, NL-1031 CM Amsterdam (NL); Wilms, Coenraad Hendrik, NL-4791 RK Klundert (NL)

(56) References cited:
- EP-A- 0 121 965

## Description

The invention relates to a process for the preparation of polymers of carbon monoxide with one or more olefinically unsaturated compounds.

It is known that linear polymers of carbon monoxide with one or more olefinically unsaturated compounds, in which polymers the units from carbon monoxide and the units from the olefinically unsaturated compound(s) are present in substantially alternating fashion, can be prepared by contacting the monomers at elevated temperature and pressure with a suitable catalyst.

In the aforesaid polymer preparation, both the polymerization rate and the average molecular weight play an important role. On the one hand it is desirable for the polymerization to achieve the highest possible polymerization rate, while on the other hand, with a view to their applications, polymers are more valuable the higher their average molecular weight. Both the polymerization rate and the average molecular weight can be influenced by the temperature employed in the polymerization. Unfortunately, the effect of the temperature on the polymerization rate and on the average molecular weight is in opposite directions, in the sense that an increase in the reaction temperature leads to an increase in the polymerization rate, but also to a decrease in the average molecular weight of the resulting polymers, assuming that other reaction conditions remain unchanged. In practice, this means that with a view to the application of the polymers the reaction temperature is set to obtain polymers with an average molecular weight that is sufficiently high for the particular application and that the polymerization rate corresponding to the set temperature has to be accepted.

In the course of an investigation by the Applicant into this polymer preparation, it has now been found that the relationship between the polymerisation rate and average molecular weight of the obtained polymers can be substantially improved by carrying out the polymerization in two steps at two different temperatures, in which first a polymer 1 is prepared at a set temperature T₁ and subsequently a polymer 2 is prepared at a set temperature T₂ which is 3-30 °C lower than T₁ and in which the preparation of polymer 2 is carried out in the presence of such a quantity of polymer 1 that the thus obtained polymer mixture contains 3-45 %w of polymer 1. This can be illustrated with the aid of the results of three polymerizations carried out batchwise under substantially the same reaction conditions, except that in the first experiment a set temperature T₁ was employed and in the second experiment a set temperature T₂, while in the third experiment polymerization was first carried out for a time t₁ at a set temperature T₁ and subsequently for a time t₂ at a set temperature T₂, the times t₁ and t₂ being chosen such that the polymer mixture obtained contained more than 3 %w but less than 45 %w of the polymer prepared at temperature T₁. In the first experiment, at a relatively high polymerization rate, a polymer was obtained with a relatively low average molecular weight. In the second experiment, at a relatively low polymerization rate, a polymer was obtained with a relatively high average molecular weight. In the third experiment a polymer mixture was prepared, the polymerisation rate and the average molecular weight being higher than was to be expected on the basis of the results in the first and second experiments and the polymerization times t₁ and t₂. The average molecular weight of the polymer mixture prepared according to the third experiment was even higher than that of the polymer prepared according to the second experiment.

The present patent application therefore relates to a process for the preparation of linear polymers of carbon monoxide with one or more olefinically unsaturated compounds, in which polymers the units from carbon monoxide and the units from the olefinically unsaturated compound(s) are present in substantially alternating fashion, which process comprises contacting the monomers at elevated temperature and pressure with a suitable catalyst, characterized in that a mixture of two polymers 1 and 2 is obtained by:
a) carrying out the preparation of polymer 1 at a set temperature T₁,
b) carrying out the preparation of polymer 2 at a set temperature T₂, which is 3-30 °C lower than T₁, and
c) carrying out the preparation of polymer 2 in the presence of such a quantity of polymer 1 that the thus obtained polymer mixture contains 3-45 %w of polymer 1.

The polymers 1 and 2 are usually substantially similar in chemical structure, in particular when they are obtained from identical monomer mixtures. They differ in their average molecular weight, however.

The process according to the invention offers the possibility of preparing polymers with a high average molecular weight at a high polymerisation rate. This is particularly important for the preparation of terpolymers of carbon monoxide with ethene and with another olefinically unsaturated compound, the preparation of products with a high average molecular weight at an acceptable polymerization rate having been difficult hitherto. As explained above, an increase in the average molecular weight of the polymers can be achieved by setting the polymerisation temperature at a lower value. But lower temperatures lead to lower polymerization rates. The average molecular weights achievable in this way are subject to maximums because at a given moment the polymerization rate becomes unacceptably low. It was found from the investigation that when carrying out the polymerization in two steps according to the invention, terpolymers could be prepared at an acceptable polymerization rate, whose average molecular weight was considerably higher than the previously mentioned maximum values.

In the process according to the invention there should be a difference between the set temperatures T₁ and T₂ of 3-30 °C. Preferably, this temperature difference is 4-25 °C and in particular 5-20 °C. In the process according to the invention, polymer 2 should be prepared in the presence of a quantity of polymer 1 such that the prepared polymer mixture contains 3-45 %w of polymer 1. The preparation of polymer 2 preferably takes place in the presence of a quantity of polymer 1 such that the polymer mixture obtained contains 4-30 %w and in particular 5-25 %w of polymer 1.

The linear alternating polymers which are prepared according to the invention are polymers of carbon monoxide with one or more olefinically unsaturated compounds. The olefinically unsaturated compounds can either be compounds consisting exclusively of carbon and hydrogen or compounds containing in addition to carbon and hydrogen one or more heteroatoms. The preparation of polymers of carbon monoxide with one or more olefinically unsaturated hydrocarbons is preferred. Examples of suitable hydrocarbon monomers are ethene, propene, butene-1, hexene-1, octene-1, styrene, cyclopentene, norbornene and dicyclopentadiene. In the process according to the invention preference is given to the preparation of copolymers of carbon monoxide with ethene and terpolymers of carbon monoxide with ethene and an α-olefin, in particular propene.

In the process according to the invention a polymer mixture is obtained by carrying out the polymerization for the preparation of polymer 2 in the presence of a polymer 1. Both the preparation of polymer 1 and that of polymer 2 can be done batchwise or continuously. An example of a combined batchwise/continuous method of preparation of the present polymer mixtures is a method of preparation in which the preparation of polymer 1 is carried out batchwise and alternately in two reactors A and B separated from each other and the preparation of polymer 2 is carried out continuously in a reactor C which is alternately connected to reactor A or B. While polymer 1 is prepared in reactor A, a polymer 1 that was previously prepared in reactor B is continuously or intermittently fed to reactor C. After the contents of reactor B have been transferred in this way to reactor C, a switch-over takes place and the contents of reactor A are fed to reactor C, while the preparation of polymer 1 is carried out in reactor B.

In the process according to the invention the preparations of polymers 1 and 2 are preferably either both carried out continuously or both carried out batchwise. The preparation of the polymer mixtures according to the invention, in which both the preparation of polymer 1 and that of polymer 2 take place batchwise, can very suitably be carried out in one reactor whereby polymerization is first carried out for some time at a temperature T₁ for the preparation of polymer 1 and subsequently continued for the rest of the polymerization time at a temperature T₂ for the preparation of polymer 2. The preparation of the polymer mixtures according to the invention, in which both the preparation of polymer 1 and that of polymer 2 take place continuously, can very suitably be carried out in two series-connected reactors whereby polymerization takes place in the first reactor at a temperature T₁ for the preparation of polymer 1 and in the second reactor at a temperature T₂ for the preparation of polymer 2.

The polymer preparation according to the invention takes place by contacting the monomers at elevated temperature and pressure with a suitable catalyst. The polymerisation is preferably carried out in the presence of a diluent in which the polymers are almost or completely insoluble. Lower aliphatic alcohols such as methanol are preferred as diluents. Suitable catalysts for the present purpose include those containing a Group VIII metal. In this patent application Group VIII metals are understood to be the noble metals ruthenium, rhodium, palladium, osmium, iridium and platinum, as well as the iron group metals iron, cobalt and nickel. Catalysts containing palladium, nickel or cobalt as Group VIII metal are preferred. Palladium is particularly preferred as Group VIII metal. If the catalysts contain a Group VIII metal, this metal is preferably incorporated in the catalyst in the form of a salt of a carboxylic acid, in particular in the form of an acetate. In addition to a Group VIII metal, the catalysts preferably contain a bidentate ligand that can form a complex with the Group VIII metal via two phosphorus-, nitrogen- or sulphur-containing dentate groups present in the bidentate ligand. If a nitrogen bidentate ligand is used, compounds with the general formula 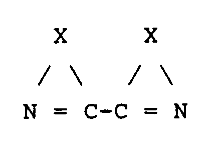
are preferred, in which X represents an organic bridge group containing three or four atoms in the bridge, of which at least two are carbon atoms, such as 2,2′-bipyridine and 1,10-phenanthroline. If a sulphur bidentate ligand is used, a compound with the general formula R¹S-R-SR¹ is preferred in which R¹ is an optionally polar substituted hydrocarbon group and R represents a divalent organic bridge group containing at least two carbon atoms in the bridge, such as 1,2-bis(ethylthio)ethane and cis-1,2-bis-(benzylthio)ethene. Preference is given to the use of phosphorus bidentate ligands with the general formula (R¹)₂P-R-P(R¹)₂ in which R and R¹ have the previously indicated meanings. Preference is further given to the use of such phosphorus bidentate ligands in which R¹ represents an aromatic hydrocarbon group carrying at least one alkoxy substituent at the ortho position relative to the phosphorus atom to which it is linked. A very suitable compound for the present purpose is 1,3-bis[bis(2-methoxyphenyl)phosphino]propane If a nitrogen or sulphur bidentate ligand is used in the catalysts, the quantity employed is preferably 0.5-100 and in particular 1-50 mol per mol Group VIII metal. If a phosphorus bidentate ligand is used, the quantity employed is preferably 0.5-2 and in particular 0.75-1.5 mol per mol Group VIII metal. In addition to a Group VIII metal and a phosphorus, nitrogen or sulphur bidentate ligand, the catalysts preferably contain an ion of an acid with a pKa of less than 4 and in particular an anion of an acid with a pKa of less than 2. Examples of suitable acids with a pKa of less than 2 are sulphonic acids such as para-toluenesulphonic acid and halogenocarboxylic acids such as trifluoroacetic acid. The anion of an acid with a pKa of less than 4 can be incorporated in the catalysts in the form of an acid and/or in the form of a salt such as a cupric or nickel salt. The anion is preferably present in the catalysts in a quantity of 1-100 and in particular 2-50 mol per mol Group VIII metal. As well as being employed as a separate component, the anion of an acid with a pKa of less than 4 can also be present in the catalysts by using, for example, palladium trifluoroacetate or palladium para-tosylate as Group VIII metal. To enhance the activity of the Group VIII metal-containing catalysts, a 1,4-quinone can also be incorporated therein. 1,4-benzoquinone and 1,4-naphthoquinone are very suitable for this purpose. The quantity of 1,4-quinone used for this purpose is preferably 5-5000 and in particular 10-1000 mol per mol Group VIII metal.

The quantity of catalyst used in the polymerization can vary within wide limits. If a Group VIII metal-containing catalyst is used, a quantity of catalyst is employed per mol olefinically unsaturated compound to be polymerized which contains 10⁻⁷-10⁻³ and in particular 10⁻⁶-10⁻⁴ mol Group VIII metal.

The polymerization is preferably carried out at a temperature of 25-150 °C and a pressure of 2-150 bar and in particular at a temperature of 30-130 °C and a pressure of 5-100 bar. The molar ratio of the olefinically unsaturated compound(s) relative to carbon monoxide is preferably 10:1 to 1:10 and in particular 5:1 to 1:5.

The higher the average molecular weight of the present polymers, the higher will generally be their intrinsic viscosity. For the determination of the intrinsic viscosity of the present polymers, first four solutions are prepared by dissolving the polymer in four concentrations in meta-cresol. For each of the solutions the viscosity at 60 °C relative to meta-cresol at 60 °C is determined in a viscometer. If Tₒ represents the outflow time of meta-cresol and Tₚ the outflow time of the polymer solution, the relative viscosity (ηᵣₑₗ) is obtained from ${\text{η}}_{\text{rel}} {\text{= (T}}_{\text{p}} {\text{/T}}_{\text{o}} \text{)}$ . The inherent viscosity ηᵢₙₕ can be calculated from ηᵣₑₗ according to the formula ${\text{η}}_{\text{inh}} {\text{= (ln η}}_{\text{rel}} \text{)/c}$ where c represents the concentration of the polymer in grams per 100 ml solution.

The intrinsic viscosity [n] in dl/g can now be found by graphically plotting nᵢₙₕ for each of the four polymer solutions against the corresponding concentration (c) and then extrapolating to c = 0.

In this patent application the designation "Limiting Viscosity Number" (LVN), recommended by the International Union of Pure and Applied Chemistry, will hereinafter be used instead of "intrinsic viscosity".

The invention will now be explained with reference to the following examples.

### Example 1

A carbon monoxide/ethene/propene terpolymer was prepared as follows. 1.5 l methanol was introduced into a mechanically stirred autoclave with a capacity of 4 l. After the contents of the autoclave had been brought to 89 °C, 10 bar propene, 18 bar carbon monoxide and 22 bar ethene were forced into the autoclave. Subsequently, a catalyst solution consisting of
10 ml acetone,
0.02 mmol palladium acetate,
0.4 mmol trifluoroacetic acid, and
0.021 mmol
1,3-bis[bis(2-methoxyphenyl)phosphino]propane was introduced into the autoclave.

The pressure in the autoclave was maintained by forcing in a 1:1 carbon monoxide/ethene mixture. The polymerization was ended after 7 hours by cooling the reaction mixture to room temperature and releasing the pressure. The terpolymer was filtered off, washed with methanol and dried. 225 g terpolymer was obtained with an LVN(60) of 1.0 dl/g. The polymerization rate was 15.2 kg terpolymer/(g palladium.hour).

### Example 2

A carbon monoxide/ethene/propene terpolymer was prepared in virtually the same manner as in example 1, but with the difference that the reaction temperature was 81 °C. 129 g terpolymer was obtained with an LVN(60) of 1.8 dl/g. The polymerization rate was 8.7 kg terpolymer/(g palladium.hour).

### Example 3

A carbon monoxide/ethene/propene terpolymer was prepared in virtually the same manner as in example 1, but with the difference that polymerization was first carried out for 30 min. at 89 °C, subsequently the contents of the autoclave were cooled in 5 minutes to 81 °C and finally polymerization was continued for a further 6 hours and 25 minutes at 81 °C. 194 g terpolymer was obtained with an LVN(60) of 2.1 dl/g. The polymerization rate was 13.1 kg terpolymer/(g palladium.hour). The quantity of terpolymer prepared in 30 minutes at 89 °C was 15.5 g.

### Examples 4 and 5

In these examples, carbon monoxide/ethene/propene terpolymers were prepared in a continuous manner in two series-connected reactors, the reaction product from the first reactor together with fresh feed components being fed continuously to the second reactor. The catalyst solution employed contained 1096 mg palladium acetate, 2736 mg 1,3-bis[bis(2-methoxyphenyl)phosphino]propane and 5600 mg trifluoroacetic acid per litre acetone. In both examples the pressure in each of the reactors was 45 bar.

The pressure in the reactors was maintained by discharging the excess of feed gases from the second reactor. In both examples, the two series-connected reactors had almost the same gas composition.

The reaction conditions in the two reactors, as well as the results obtained from the examples, are given in Table I.

Of examples 1-5, examples 3 and 5 are according to the invention. In example 3 a polymer 2 was prepared batchwise at a set temperature of 81 °C in the presence of a quantity of a polymer 1, that had been prepared at a set temperature of 89 °C, such that the thus obtained polymer mixture contained 8 %w of polymer 1. In example 5 a polymer 2 was prepared continuously at a set temperature of 77 °C in the presence of a quantity of a polymer 1, that had been prepared at a set temperature of 90 °C, such that the thus obtained polymer mixture contained 13 %w of polymer 1. Examples 1, 2 and 4 fall outside the scope of the invention and are included for comparison. Examples 1 and 2 relate to batchwise polymer preparations at a set temperature of 89 and 81 °C respectively. Example 4 relates to a continuous polymer preparation in two series-connected reactors in which the polymerisation in each of the two reactors is carried out at a set temperature of 77 °C.

The advantage of the preparation according to the invention of a polymer 2 in the presence of a polymer 1 appears clearly from a comparison of the results of example 3 with those of examples 1 and 2. From the results of examples 1 and 2 and the polymerisation times chosen in example 3, it was expected that example 3 at a lower polymerization rate would produce a polymer mixture having a lower average molecular weight than was found experimentally. The average molecular weight of the polymer mixture was found to be even higher than that of the polymer prepared at the low temperature.

The advantage of the preparation according to the invention of a polymer 2 in the presence of a polymer 1 is also clearly shown by comparison of the results of examples 4 and 5. From the results of example 4, it was expected that example 5 at a lower polymerization rate would produce a polymer mixture in the second reactor with a lower average molecular weight than was found experimentally. In this case as well, it was found that the average molecular weight of the polymer mixture was higher than that of the polymer prepared at the low temperature.

It was established by ¹³C-NMR analysis that the carbon monoxide/ethene/propene terpolymers prepared according to examples 1-5 were built from linear chains in which on the one hand the units from carbon monoxide and on the other hand the units from ethene and propene occurred in a substantially alternating arrangement. It was also established that the -CO-C₂H₄- units and the -CO-C₃H₆- units occurred in the polymer chains in a substantially random arrangement.

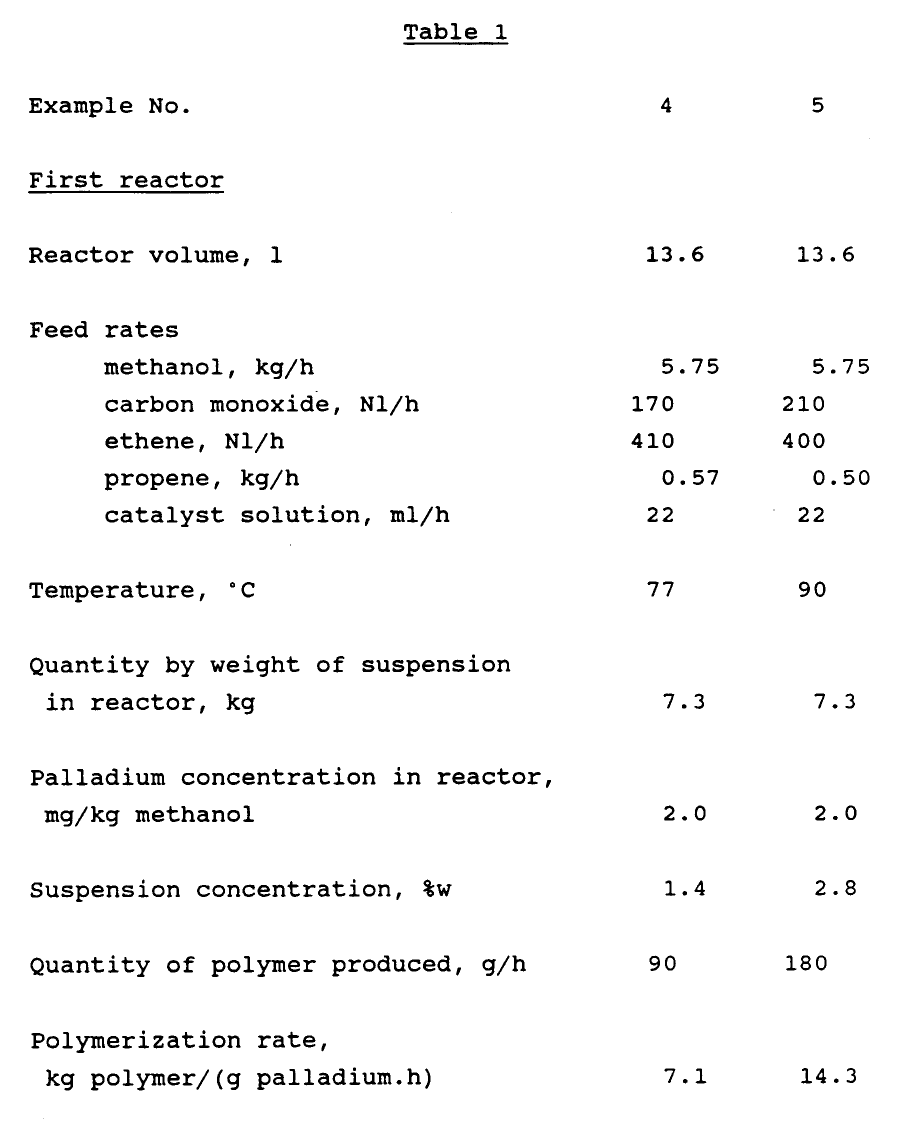

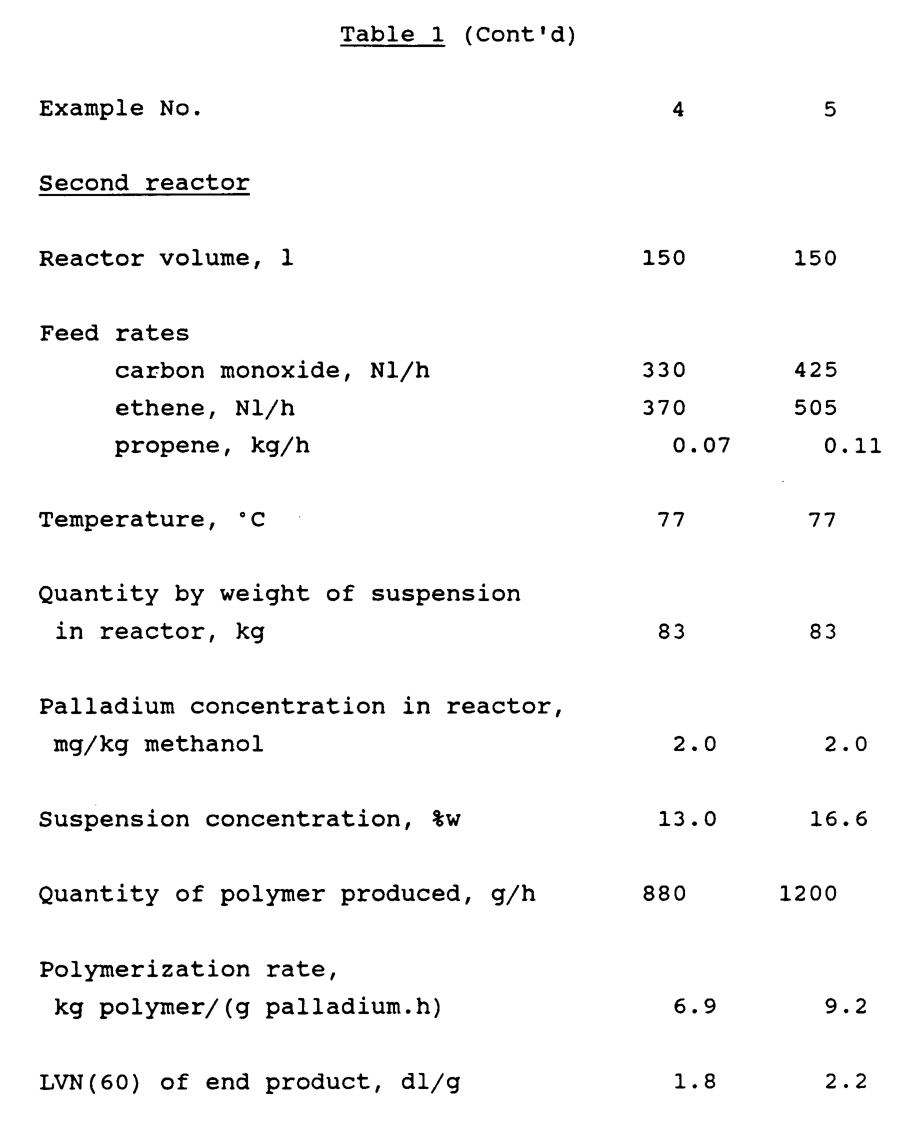

## Claims

1. Process for the preparation of linear polymers of carbon monoxide with one or more olefinically unsaturated compounds, in which polymers the units from carbon monoxide and the units from the olefinically unsaturated compound(s) are present in substantially alternating fashion, which process comprises contacting the monomers at elevated temperature and pressure with a suitable catalyst, characterized in that a mixture of two polymers 1 and 2 is obtained by:
a) carrying out the preparation of polymer 1 at a set temperature T₁,
b) carrying out the preparation of polymer 2 at a set temperature T₂, which is 3-30 °C lower than the temperature T₁, and
c) carrying out the preparation of polymer 2 in the presence of such a quantity of polymer 1 that the thus obtained polymer mixture contains 3-45 %w of polymer 1.

2. Process according to claim 1, characterized in that the difference between the temperatures T₁ and T₂ is 4-25 °C.

3. Process according to claim 1 or 2, characterized in that the preparation of polymer 2 is carried out in the presence of such a quantity of polymer 1 that the prepared polymer mixture contains 4-30 %w of polymer 1.

4. Process according to one or more of claims 1-3, characterized in that the preparations of polymer 1 and polymer 2 are both carried out batchwise.

5. Process according to claim 4, characterized in that it is carried out in one reactor, polymerization being first carried out for some time at a temperature T₁ for the preparation of polymer 1 and subsequently continued for the rest of the polymerization time at a temperature T₂ for the preparation of polymer 2.

6. Process according to one or more of claims 1-3, characterized in that the preparations of polymer 1 and polymer 2 are both carried out continuously.

7. Process according to claim 6, characterized in that it is carried out in two series-connected reactors, polymerization taking place in the first reactor at a temperature T₁ for the preparation of polymer 1 and in the second reactor at a temperature T₂ for the preparation of polymer 2.

8. Process according to one or more of claims 1-7, characterized in that the catalyst contains a Group VIII metal and a bidentate ligand that can form a complex with the Group VIII metal via two phosphorus-, nitrogen- or sulphur-containing dentate groups contained in the bidentate ligand.

9. Process according to one or more of claims 1-8, characterized in that it is carried out at a temperature of 25-150 °C, a pressure of 2-150 bar and a molar ratio of the olefinically unsaturated compound(s) relative to carbon monoxide of 10:1 to 1:10.

## Patentansprüche

1. Verfahren zur Herstellung von linearen Polymeren aus Kohlenmonoxid und einer oder mehreren olefinisch ungesättigten Verbindungen, wobei in den polymeren die Kohlenmonoxideinheiten und die Einheiten aus olefinisch ungesättigter Verbindung bzw. ungesättigten Verbindungen im wesentlichen in alternierender Form vorliegen, durch Kontaktierung der Monomere mit einem geeigneten Katalysator bei erhöhter Temperatur und erhöhtem Druck, dadurch gekennzeichnet, daß ein Gemisch aus zwei Polymeren 1 und 2 dadurch erhalten wird, daß man
a) die Herstellung des Polymers 1 bei einer auf T₁ eingestellten Temperatur,
b) die Herstellung des Polymers 2 bei einer auf T₂ eingestellten Temperatur, die 3-30°C niedriger liegt als die Temperatur T₁, und
c) die Herstellung des Polymers 2 in Gegenwart solch einer Menge des Polymers 1 durchführt, daß das so erhaltene Polymergemisch 3-45 Gew.-% des Polymers 1 enthält.

2. Verfahren nach Anspruch 1, dadurch gekennzeichnet, daß der Unterschied zwischen den Temperaturen T₁ und T₂ 4-25°C beträgt.

3. Verfahren nach Anspruch 1 oder 2, dadurch gekennzeichnet, daß die Herstellung des Polymers 2 in Gegenwart solch einer Menge des Polymers 1 erfolgt, daß das hergestellte Polymergemisch 4-30 Gew.-% des Polymers 1 enthält.

4. Verfahren nach einem oder mehreren der Ansprüche 1-3, dadurch gekennzeichnet, daß die Herstellung des Polymers 1 und die des Polymers 2 beide diskontinuierlich erfolgen.

5. Verfahren nach Anspruch 4, dadurch gekennzeichnet, daß es in einem Reaktor durchgeführt wird, wobei die Polymerisation zur Herstellung des Polymers 1 zunächst eine Zeitlang bei einer Temperatur T₁ durchgeführt und anschließend zur Herstellung des Polymers 2 während der restlichen Polymerisationszeit bei einer Temperatur T₂ weitergeführt wird.

6. Verfahren nach einem oder mehreren der Ansprüche 1-3, dadurch gekennzeichnet, daß sowohl die Herstellung des Polymers 1 als auch die des Polymers 2 kontinuierlich erfolgen.

7. Verfahren nach Anspruch 6, dadurch gekennzeichnet, daß es in zwei in Reihe geschalteten Reaktoren durchgeführt wird, wobei die Polymerisation im ersten Reaktor zur Herstellung des Polymers 1 bei einer Temperatur T₁ und im zweiten Reaktor zur Herstellung des Polymers 2 bei einer Temperatur T₂ erfolgt.

8. Verfahren nach einem oder mehreren der Ansprüche 1-7, dadurch gekennzeichnet, daß der Katalysator ein Metall aus Gruppe VIII und einen zweizähnigen Liganden enthält, der zur Komplexbildung mit dem Metall aus Gruppe VIII mittels zweier in dem zweizähnigen Liganden enthaltener phosphor-, stickstoff- oder schwefelhaltiger Gruppen befähigt ist.

9. Verfahren nach einem oder mehreren der Ansprüche 1-8, dadurch gekennzeichnet, daß es bei einer Temperatur von 25-150°C, einem Druck von 2-150 bar und einem Molverhältnis von olefinisch ungesättigter Verbindung bzw. olefinisch ungesättigten Verbindungen zu Kohlenmonoxid von 10:1 bis 1:10 durchgeführt wird.

## Revendications

1. Procédé pour la préparation de polymères linéaires de monoxyde de carbone avec un ou plusieurs composés oléfiniquement insaturés, polymères dans lesquels les unités dérivées du monoxyde de carbone et les unités dérivées du ou des composés oléfiniquement insaturés sont présentes d'une manière substantiellemen alternée, lequel procédé comprend la mise en contact des monomères à température et pression élevées avec un catalyseur approprié, caractérisé en ce qu'on obtient un mélange de deux polymères l et 2 :
a) en effectuant la préparation du polymère l à une température de réglage T₁,
b) en effectuant la préparation du polymère 2 à une température de réglage T₂, qui est plus basse de 3-30°C que T₁, et
c) en effectuant la préparation du polymère 2 en présence d'une quantité de polymère l telle que le mélange de polymères ainsi obtenu contienne 3-45 % en poids de polymère l.

2. Procédé selon la revendication 1, caractérisé en ce que la différence entre les températures T₁ et T₂ est de 4-25°C.

3. Procédé selon la revendication l ou 2, caractérisé en ce que la préparation du polymère 2 est effectuée en présence d'une quantité de polymère l telle que le mélange de polymères préparé contienne 4-30 % en poids de polymère l.

4. Procédé selon une ou plusieurs des revendications l-3, caractérisé en ce que les préparations du polymère l et du polymère 2 sont effectuées toutes deux d'une manière discontinue.

5. Procédé selon la revendication 4, caractérise en ce qu'il est mis en oeuvre dans un seul réacteur, la polymérisation étant effectuée d'abord pendant un certain temps a une température T₁ pour la préparation du polymère l et continuée ensuite pendant le reste du temps de polymérisation à une température T₂ pour la préparation du polymère 2.

6. Procédé selon une ou plusieurs des revendications l-3, caractérisé en ce que les préparations du polymère l et du polymère 2 sont effectuées toutes deux d'une manière continue.

7. Procédé selon la revendication 6, caractérise en ce qu'il est mis en oeuvre dans deux réacteurs montés en série, la polymérisation ayant lieu dans le premier réacteur à une température T₁ pour la préparation du polymère l et dans le second réacteur a une température T₂ pour la préparation du polymère 2.

8. Procédé selon une ou plusieurs des revendications l-7, caractérisé en ce que le catalyseur contient un métal du groupe VIII et un ligand bidenté qui peut former un complexe avec le métal du groupe VIII grâce à deux groupes dentés contenant du phosphore, de l'azote ou du soufre contenus dans le ligand bidenté.

9. Procédé selon une ou plusieurs des revendications l-8, caractérisé en ce qu'il est mis en oeuvre à une température de 25-150°C, une pression de 2-l50 bars et un rapport molaire du composé ou des composés oléfiniquement insaturés au monoxyde de carbone compris entre l0:l et l:l0.
